# EUROPEAN PATENT APPLICATION

(11) **EP 4 474 331 A1**
(43) Date of publication of application: **11.12.2024**
(21) Application number: 23822993.4
(22) Date of filing: 07.06.2023
(51) Int. Cl.: B66B 5/16, B66B 5/00, H02M 3/335

(54) **ELEVATOR CONTRACTING BRAKE CONTROL CIRCUIT, AND ELEVATOR**

(30) Priority: 16.06.2022 CN 202210680726
(71) Applicant: Suzhou Inovance Control Technology Co., Ltd., Suzhou, Jiangsu 215000 (CN)
(72) Inventor: WANG, Liang, Suzhou, Jiangsu 215000 (CN); BAI, Yinhe, Suzhou, Jiangsu 215000 (CN); GE, Yao, Suzhou, Jiangsu 215000 (CN); GAO, Shang, Suzhou, Jiangsu 215000 (CN)
(74) Representative: Osterhoff, Utz
(86) International application number: PCT/CN2023/098739
(87) International publication number: WO 2023/241424

(57) **Abstract**

Disclosed are an elevator contracting brake control circuit (100) and an elevator. The elevator contracting brake control circuit (100) includes: a safety control module (10); a power supply switching circuit (20); and a microprocessor (30); a control end of the safety control module (10) is connected to an elevator safety loop (200), an input end of the safety control module (10) is connected to the microprocessor (30), and an output end of the safety control module (10) is connected to a control end of the power supply switching circuit (20); the microprocessor (30) is configured to output a control signal to the safety control module (10); the safety control module (10) is configured to turn on or turn off an electrical connection between the microprocessor (30) and the power supply switching circuit (20) according to an output signal of the elevator safety loop (200).

## Description

### CROSS-REFERENCE TO RELATED APPLICATIONS

The present application claims priority to Chinese patent application No. 202210680726.9, filed on June 16, 2022, the entire contents of which are incorporated herein by reference.

### TECHNICAL FIELD

The present application relates to the technical field of elevator control, and in particular to an elevator contracting brake control circuit and an elevator.

### BACKGROUND

After decades of development, the elevator industry in our country has become one of the important and indispensable construction equipment in the urbanization construction of modern society, and an indispensable part of people's lives. At the same time, elevator safety has also received more and more attention from people.

The elevator brake is an important device to ensure the safe operation of the elevator. When the elevator rises or falls, the contracting brake coil of the brake needs to be energized to open the brake; when the elevator stops normally or stops in an emergency, the current of the brake coil needs to be cut off to keep the elevator stopped and ensure the elevator stops safely.

At present, the brake power supply is mainly cut off through the contactor. When the contactor is disconnected in the machine room-less elevator and the household elevator, there is a contact arc phenomenon, which leads to a high failure rate of the contactor and even stops the elevator and traps people. The brake reliability of the elevator is not high, and it is difficult to meet people's demand for high safety of the elevator.

### SUMMARY

The main purpose of the present application is to provide an elevator contracting brake control circuit and an elevator, aiming to solve the problem of low brake reliability of the existing elevator.

In order to achieve the above purpose, the present application provides an elevator contracting brake control circuit, including:
a safety control module;
a power supply switching circuit; and
a microprocessor,
a control end of the safety control module is connected to an elevator safety loop, an input end of the safety control module is connected to the microprocessor, and an output end of the safety control module is connected to a control end of the power supply switching circuit;
the microprocessor is configured to output a control signal to the safety control module;
the safety control module is configured to turn on or turn off an electrical connection between the microprocessor and the power supply switching circuit according to an output signal of the elevator safety loop; and
the power supply switching circuit is configured to supply power to a braking component according to the control signal.

In an embodiment, the microprocessor is configured to output a pulse width modulation (PWM) control signal to the safety control module; and
the safety control module is configured to generate a safety signal according to an output power supply of the elevator safety loop, and the safety signal is configured to control a transmission channel of the PWM control signal to be turned on or turned off.

In an embodiment, the microprocessor is configured to output the PWM control signal to the safety control module;
the safety control module includes a first transformer and an isolation module; and
the first transformer is configured to generate a safety power supply according to the output power supply of the elevator safety loop, and the safety power supply is configured to control the isolation module to start or stop.

In an embodiment, the safety control module further includes a rectifier filter circuit, and the isolation module includes a first isolation chip and a second isolation chip;
an input end of the first transformer is connected to the elevator safety loop, an output end of the first transformer is connected to an input end of the rectifier filter circuit, an output end of the rectifier filter circuit is respectively connected to a power supply end of the first isolation chip and a power supply end of the second isolation chip, an input end of the first isolation chip is connected to the microprocessor, an output end of the first isolation chip is connected to an input end of the second isolation chip, and an output end of the second isolation chip is connected to the control end of the power supply switching circuit; and
the rectifier filter circuit is configured to convert the safety power supply into a power source, and the power source is configured to control the first isolation chip and the second isolation chip to start or stop.

In an embodiment, the control end of the safety control module is connected to an end of the elevator safety loop.

In an embodiment, the elevator includes:
an elevator controller,
the elevator safety loop includes a safety circuit and a switch circuit;
a control end of the switch circuit is configured to connect to the elevator controller, an input end of the switch circuit is configured to access the safety circuit, and an output end of the switch circuit is connected to the control end of the safety control module;
the switch circuit is configured to be conductive according to a closing signal issued by the elevator controller, so as to transmit an output signal of the safety circuit to the safety control module; and
the switch circuit is configured to be disconnected according to a shutting off signal issued by the elevator controller, so as to stop transmitting the output signal of the safety circuit.

In an embodiment, the elevator includes:
an elevator controller,
an input end of the microprocessor is configured to connect to the elevator controller;
the microprocessor is further configured to output a control signal according to a brake opening signal issued by the elevator controller to control the power supply switching circuit to supply power to the braking component; and
the microprocessor is configured to output a stop signal according to a brake holding signal issued by the elevator controller to control the power supply switching circuit to stop supplying power to the braking component.

In an embodiment, the power supply switching circuit includes a power conversion circuit, a second transformer and an output rectifier circuit;
a control end of the power conversion circuit is a control end of the power supply switching circuit, an output end of the power conversion circuit is connected to a primary side of the second transformer, a secondary side winding of the second transformer is connected to an input end of the output rectifier circuit, and an output end of the output rectifier circuit is an output end of the power supply switching circuit; and
the power conversion circuit is configured to convert an input first DC power supply voltage according to the control signal and transmit the first DC power supply voltage to the secondary side winding of the second transformer through the primary side of the second transformer, so that the first DC power supply voltage is converted into a second DC voltage and is output.

In an embodiment, the power conversion circuit is a full-bridge topology circuit or a half-bridge topology circuit, and the output rectifier circuit is a full-wave rectifier circuit or a full-bridge rectifier circuit.

The present application also provides an elevator, including:
a elevator safety loop;
a braking component; and
the elevator contracting brake control circuit;
the elevator contracting brake control circuit includes a safety control module, a power supply switching circuit and a microprocessor;
a control end of the safety control module is connected to a elevator safety loop, an input end of the safety control module is connected to the microprocessor, and an output end of the safety control module is connected to a control end of the power supply switching circuit;
the microprocessor is configured to output a control signal to the safety control module;
the safety control module is configured to turn on or turn off an electrical connection between the microprocessor and the power supply switching circuit according to an output signal of the elevator safety loop; and
the power supply switching circuit is configured to supply power to the braking component according to the control signal.

The present application provides an elevator contracting brake control circuit and an elevator. The elevator contracting brake control circuit includes a safety control module, a power supply switching circuit and a microprocessor. The control end of the safety control module is connected to the elevator safety loop, the input end of the safety control module is connected to the microprocessor, and the output end of the safety control module is connected to the control end of the power supply switching circuit. The microprocessor is used to output a control signal to the safety control module. The safety control module is used to turn on or turn off the electrical connection between the microprocessor and the power supply switching circuit according to the output signal of the elevator safety loop. The power supply switching circuit is used to supply power to the braking component according to the control signal. Therefore, when the elevator safety loop is normally conductive, the safety control module is conductive, and the microprocessor controls the power supply switching circuit to power on or off the braking component. Moreover, when an abnormality occurs in the elevator safety loop, the braking component will not be powered on, so that the elevator is in a stopped state, thereby further ensuring the safety of the elevator. Compared with the related art, the holding brake contactor is eliminated, thus avoiding the situation where the elevator stops and people are trapped due to the abnormal holding brake contactor, and also avoiding the action noise of holding brake contactor, thereby improving people's experience in the elevator.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a functional module view of an elevator contracting brake control circuit according to an embodiment of the present application.
FIG. 2 is a partial functional module view of the elevator contracting brake control circuit according to an embodiment of the present application.
FIG. 3 is a partial circuit structural view of the elevator contracting brake control circuit according to an embodiment of the present application.
FIG. 4 is a functional module view of the elevator contracting brake control circuit according to an embodiment of the present application.
FIG. 5 is a circuit structural view of the elevator contracting brake control circuit according to an embodiment of the present application.
FIG. 6 is a circuit structural view of the elevator contracting brake control circuit according to an embodiment of the present application.

The realization of the objective, functional characteristics, and advantages of the present application are further described with reference to the accompanying drawings.

### Description of reference signs

| reference sign | name | reference sign | name |
|---|---|---|---|
| 100 | elevator contracting brake control circuit | 22 | output rectifier circuit |
| 200 | elevator safety loop | T1 | first transformer |
| 300 | braking component | T2 | second transformer |
| 400 | elevator controller | U1 | first isolation chip |
| 10 | safety control module | U2 | second isolation chip |
| 20 | power supply switching circuit | D1~D6 | first diode to sixth diode |
| 30 | microprocessor | Co | first capacitor |
| 201 | switch circuit | Co2 | second capacitor |
| 202 | safety circuit | Lf | first inductor |
| 11 | isolation module | Lf2 | second inductor |
| 12 | rectifier filter circuit | Q1~Q8 | first switch tube to eighth switch tube |
| 21 | power conversion circuit | | |

### DETAILED DESCRIPTION OF THE EMBODIMENTS

It should be understood that the embodiments are only intended to illustrate the present application rather than to limit the present application. The technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

It should be noted that if there are directional indications, such as up, down, left, right, front, back, etc, involved in the embodiments of the present application, the directional indications are only used to explain a certain posture as shown in the accompanying drawings. If the specific posture changes, the directional indication also changes accordingly.

In addition, if there are descriptions related to "first", "second", etc. in the embodiments of the present application, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of protection claimed in the present application.

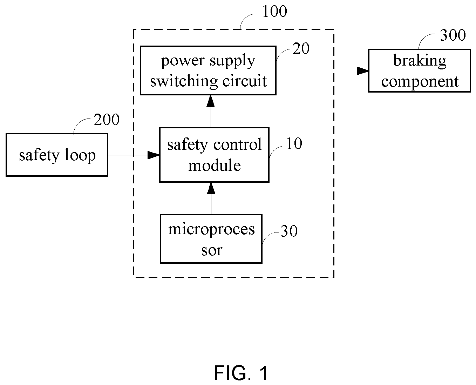

The present application provides an elevator contracting brake control circuit, referring to FIG. 1, in an embodiment, the elevator contracting brake control circuit 100 includes a safety control module 10, a power supply switching circuit 20 and a microprocessor 30. The control end of the safety control module 10 is connected to the elevator safety loop 200, the input end of the safety control module 10 is connected to the microprocessor 30, and the output end of the safety control module 10 is connected to the control end of the power supply switching circuit 20. The microprocessor 30 is configured to output a control signal to the safety control module 10; the safety control module 10 is configured to turn on or turn off the electrical connection between the microprocessor 30 and the power supply switching circuit 20 according to the output signal of the elevator safety loop 200; and the power supply switching circuit 20 is configured to supply power to the braking component 300 according to the control signal.

The elevator contracting brake control circuit 100 is used for the elevator, and the braking component 300 can be the braking coil in the elevator brake. By supplying or disconnecting power to the braking coil, other components in the brake can open or hold the brake, and the elevator can be controlled to operate or stop operating accordingly.

It can be understood that in order to ensure that the elevator can operate safely, many safety components are installed on the elevator. Only when each of the safety components is normal, the elevator can operate, otherwise the elevator stops operating immediately. Specifically, each of the safety components of the elevator is equipped with a safety switch, and all safety switches are connected in series in the elevator safety loop 200. Only when all safety switches are connected, the elevator safety loop 200 is conductive and the elevator can be powered to operate. Therefore, the safety control module 10 is connected to the elevator safety loop 200. When the elevator safety loop 200 is disconnected, the braking component 300 cannot be powered, and the elevator is still in the braking state, which ensures the safety of the elevator.

Only when the elevator safety loop 200 is conductive, the safety control module 10 is conductive, so that the control signal output by the microprocessor 30 can be transmitted to the power supply switching circuit 20 to control the power supply switching circuit 20 to supply power to the braking component 300, so that the elevator brake opens the brake and the elevator car operates; or the microprocessor 30 controls the power supply switching circuit 20 to stop supplying power to the braking component 300 through the output signal of the safety control module 10, so that the elevator brake holds the brake and the elevator car stops operating.

When any safety switch in the elevator safety loop 200 turns off, the elevator safety loop 200 is disconnected and triggers the safety control module 10 to turn off, thereby disconnecting the electrical connection between the microprocessor 30 and the power supply switching circuit 20. The power supply switching circuit 20 stops supplying power to the braking component 300 when it cannot receive the control signal, so that the brake holds the brake and the elevator stops operating.

By setting the safety control module 10, the power supply switching circuit 20 and the microprocessor 30, the control end of the safety control module 10 is connected to the elevator safety loop 200, the input end of the safety control module 10 is connected to the microprocessor 30, and the output end is connected to the control end of the power supply switching circuit 20. The microprocessor 30 is configured to output a control signal to the safety control module 10 via the safety control module 10; the safety control module 10 is configured to turn on or turn off the electrical connection between the microprocessor 30 and the power supply switching circuit 20 according to the output signal of the elevator safety loop 200; and the power supply switching circuit 20 is configured to supply power to the braking component 300 according to the control signal. Thus, when the elevator safety loop 200 is normally conductive, the safety control module 10 is conductive, and the microprocessor 30 controls the power supply switching circuit 20 to power on or off the braking component 300, so that the elevator car operates or stops; and when the elevator safety loop 200 is abnormal, the braking component 300 will not be powered on, so that the elevator car is in a stopped state, further ensuring the safety of the elevator. Compared with the related art, the holding brake contactor is canceled, the situation of people being trapped in the elevator due to the abnormal holding brake contactor is avoided, and the action noise of the holding brake contactor is also avoided, which improves the experience of the elevator for passengers and surrounding residents.

In an embodiment, the microprocessor 30 is configured to output a pulse width modulation (PWM) control signal to the safety control module 10; the safety control module 10 is configured to generate a safety signal according to the output power supply of the elevator safety loop 200, and the safety signal is configured to control the transmission channel of the PWM control signal to turn on or turn off.

In this embodiment, the output power supply of the elevator safety loop 200 is determined by the elevator safety loop power supply. The elevator safety loop power supply needs to be selected according to different elevator systems, for example, 110V/220V high-voltage AC power supply or 24V/48V DC power supply.

The safety control module 10 is configured to generate a safety signal according to the output power supply of the elevator safety loop 200. The safety signal can turn on or turn off the transmission channel for transmitting the PWM control signal inside the safety control module 10, thereby transmitting the PWM control signal to the power supply switching circuit 20.

The power supply switching circuit 20 can be a power conversion circuit of a switch power supply, and the PWM control signal is configured to control the working state of the power supply switching circuit 20. Therefore, whether the device of the safety control module 10 or the device of the switch power supply itself fails, the secondary side of the switch power supply will not supply power to the braking component 300, so that if any device in this embodiment is abnormal, the elevator car will remain in the stopped state, ensuring the high safety of the elevator.

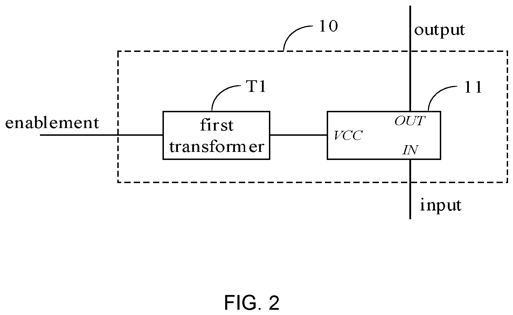

Referring to FIG. 2, in an embodiment, the microprocessor 30 is configured to output a PWM control signal to the safety control module 10; the safety control module 10 includes a first transformer T1 and an isolation module 11; the first transformer T1 is configured to generate a safety power supply according to the output power supply of the elevator safety loop 200, and the safety power supply is configured to control the start or stop of the isolation module 11.

In this embodiment, the output power supply of the elevator safety loop 200 may be 110V/220V AC power, and the first transformer T1 is configured to convert the high voltage power into a low voltage AC safety power supply. The first transformer T1 is connected to the elevator safety loop 200 and the isolation module 11 respectively, and the isolation module 11 is also connected to the microprocessor 30 and the control end of the power supply switching circuit 20. The first transformer T1 is configured to generate a safety power supply according to the output power supply of the elevator safety loop 200, and the safety power supply is configured as a start power supply of the isolation module 11 to control the start or stop of the isolation module 11. The isolation module 11 starts according to the safety power supply and turns on the electrical connection between the microprocessor 30 and the power supply switching circuit 20. The isolation module 11 stops when not receiving the safety power supply and turns off the electrical connection between the microprocessor 30 and the power supply switching circuit 20. Thus, the path between microprocessor 30 and power supply switching circuit 20 can be controlled according to the state of elevator safety loop 200, thus ensuring the safety of the elevator.

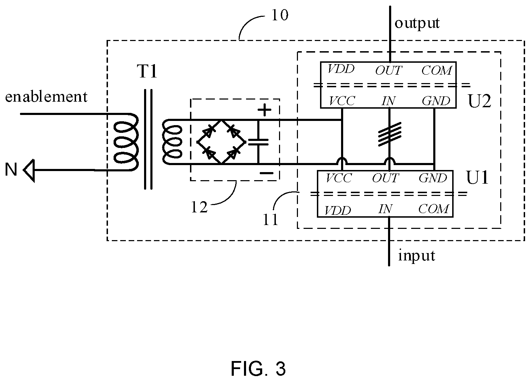

Referring to FIG. 3, in an embodiment, the safety control module 10 further includes a rectifier filter circuit 12, a first isolation chip U1, and a second isolation chip U2. The input end of the first transformer T1 is connected to the elevator safety loop 200, the output end of the first transformer T1 is connected to the input end of the rectifier filter circuit 12, the output end of the rectifier filter circuit 12 is respectively connected to the power supply end of the first isolation chip U1 and the power supply end of the second isolation chip U2, the input end of the first isolation chip U1 is connected to the microprocessor 30, the output end of the first isolation chip U1 is connected to the input end of the second isolation chip U2, and the output end of the second isolation chip U2 is connected to the control end of the power supply switching circuit 20. The rectifier filter circuit 12 is configured to convert the safety power supply into a power supply, and the power supply is configured to control the start of the first isolation chip U1 and the second isolation chip U2.

In this embodiment, the rectifier filter circuit 12 converts the safety power supply into a power supply suitable for the first isolation chip U1 and the second isolation chip U2. The input end (enablement) of the primary side of the first transformer T1 is connected to the elevator safety loop 200, and the output end of the primary side is grounded. The secondary side winding is connected to the rectifier filter circuit 12. The rectifier filter circuit 12 may include a rectifier circuit and a filter capacitor, which are not specifically limited.

When the elevator safety loop 200 outputs the power supply, the first transformer T1 and the rectifier filter circuit 12 start to work and output the power supply. The first isolation chip U1 and the second isolation chip U2 are both started according to the power supply. The input end and output end of the first isolation chip U1 are conductive, and the input end and output end of the second isolation chip U2 are conductive, so that the microprocessor 30 and the power supply switching circuit 20 are connected via the first isolation chip U1 and the second isolation chip U2. The microprocessor 30 controls the braking component 300 by controlling the power supply switching circuit 20. In this embodiment, two isolation chips are provided so that the path between the microprocessor 30 and the power supply switching circuit 20 is completely isolated and not interfered by other signals, further meeting the safety requirements.

In an embodiment, the control end of the safety control module 10 is connected to the end of the elevator safety loop 200. Therefore, when any safety switch in the elevator safety loop 200 is turned off, it cannot receive the output power supply of the elevator safety loop 200, and the safety control module 10 will disconnect the connection between the microprocessor 30 and the power supply switching circuit 20, so that the elevator holds the brake, further improving the safety of the elevator.

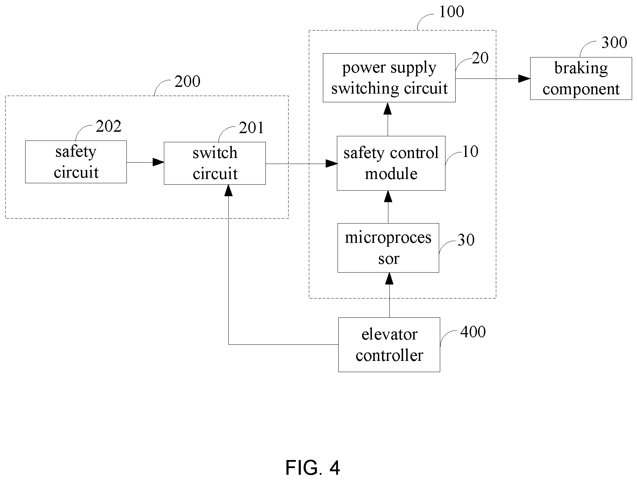

Referring to FIG. 4, in an embodiment, the elevator further includes an elevator controller 400. The input end of the microprocessor 30 is configured to connect to the elevator controller 400. The microprocessor 30 is configured to output a control signal according to a brake opening signal issued by the elevator controller 400 to control the power supply switching circuit 20 to supply power to the braking component 300, and is configured to output a stop signal according to a brake holding signal issued by the elevator controller 400 to control the power supply switching circuit 20 to stop supplying power to the braking component 300.

In this embodiment, the elevator controller 400 may be a mainboard of the elevator, which is configured to collect the elevator operating state, output corresponding control instructions, and control the elevator to operate correctly and safely. The control instructions output by the elevator controller 400 include a brake holding signal for controlling the elevator brake to brake and a brake opening signal for stopping braking. When receiving the brake opening signal, the microprocessor 30 outputs a control signal for controlling the power supply switching circuit 20 to start working, so as to control the microprocessor 30 to supply power to the braking component 300. When receiving the brake holding signal, the microprocessor 30 outputs a control signal for controlling the power supply switching circuit 20 to stop outputting, so as to control the microprocessor 30 to stop supplying power to the braking component 300, and to power off the braking component 300.

Further, the elevator controller 400 can first detect the state of the elevator safety loop 200, and when the elevator safety loop 200 is disconnected, the elevator controller 400 outputs the brake holding signal to the microprocessor 30. If the safety control module 10 is abnormal and not disconnected at this time, the elevator controller 400 can still trigger the braking component 300 through the microprocessor 30, so that the elevator brake holds the brake, so that the safety of the brake control of the elevator is higher.

In an embodiment, the elevator further includes an elevator controller 400, and the elevator safety loop 200 includes a safety circuit 202 and a switch circuit 201. The control end of the switch circuit 201 is configured to connect to the elevator controller 400, the input end of the switch circuit 201 is configured to access the safety circuit 202, and the output end of the switch circuit 201 is connected to the control end of the safety control module 10.

The switch circuit 201 is configured to be conductive according to the closing signal issued by the elevator controller 400, so as to transmit the output signal of the safety circuit 202 to the safety control module 10; the switch circuit 201 is configured to be disconnected according to the shutting off signal issued by the elevator controller 400, so as to stop transmitting the output signal of the safety circuit 202.

In this embodiment, the safety circuit 202 may include a elevator safety loop power supply and a safety switch in each of the safety components in the elevator, and the switch circuit 201 may also be provided at the end of the safety circuit 202. By setting the switch circuit 201, the elevator controller 400 can control whether the safety control module 10 can receive the output power supply of the safety circuit 202, thereby conducting or disconnecting, so that the safety control module 10 is equivalent to the control end of the brake holding control circuit 100, and the switch power supply is as the execution end to form an isolated control circuit to control the power on or off of the braking coil. Therefore, the elevator controller 400 and the safety circuit 202 can be used for dual control, which further enhances the reliability of the brake control of the elevator, and the possibility of failure of both the elevator controller 400 and the safety circuit 202 is low, which also makes the elevator safer.

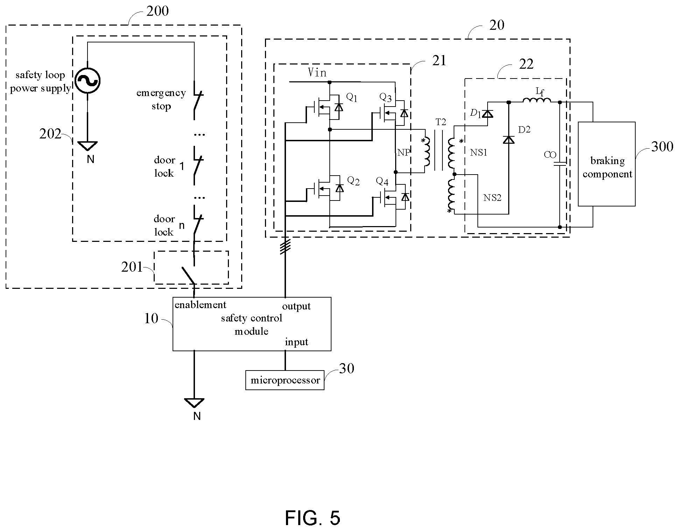

Referring to FIG. 5, in an embodiment, the power supply switching circuit 20 includes a power conversion circuit 21, a second transformer T2, and an output rectifier circuit 22. The control end of the power conversion circuit 21 is the control end of the power supply switching circuit 20, the output end of the power conversion circuit 21 is connected to the primary side of the second transformer T2, the secondary side winding of the second transformer T2 is connected to the input end of the output rectifier circuit 22, and the output end of the output rectifier circuit 22 is the output end of the power supply switching circuit 20. The power conversion circuit 21 is configured to convert the connected first DC power supply voltage according to the PWM control signal and transmit it to the secondary side winding of the second transformer T2 through the primary side of the second transformer T2, so as to be converted into the second DC voltage by the output rectifier circuit 22 and output.

In this embodiment, the switch power supply 20 may also include an AC power supply input end and an input rectifier circuit. The AC power supply input end is configured to input an AC power supply. The AC power supply can be selected according to actual needs. The input rectifier circuit is configured to rectify the AC power supply into a first DC power supply Vin. The voltage of the first DC power supply Vin can also be set according to actual conditions. The switch power supply 20 may also include a filter circuit, a sampling circuit, an overvoltage protection circuit and other circuits, which can be set in accordance with the common technology in the field in combination with actual needs.

The microprocessor 30 is configured to generate a PWM control signal with a corresponding duty cycle according to the feedback signal of the output rectifier circuit 22. A plurality of switch tubes in the power conversion circuit 21 convert the input first DC power supply voltage into a high-frequency AC voltage according to the PWM control signal, and apply it to the primary side of the second transformer T2. The secondary side winding of the second transformer T2 senses the AC voltage and then passes through the output rectifier circuit 22, and finally converts it into a stable second DC voltage and outputs it to the braking component 300 for power supply. The feedback signal of the output rectifier circuit 22 may include an output current signal sampled by a sampling circuit provided at the output end and an input current signal sampled by a sampling circuit provided at the input end.

Since the primary side and the secondary side windings of the second transformer T2 are insulated from each other, the electrical isolation between the AC power supply input or the first DC power supply and the second DC voltage output is achieved through the second transformer T2. The second transformer T2 may use a high-frequency transformer to realize energy transfer or energy storage. The high-frequency transformer can also reduce the space occupied by the transformer (the transformer is small in size) and improve work efficiency.

The circuit structure of the power conversion circuit 21 may be a full-bridge topology or a half-bridge topology. As shown in FIG. 5, the power conversion circuit 21 may include a first switch tube Q1, a second switch tube Q2, a third switch tube Q3 and a fourth switch tube Q4. The first to the fourth switch tubes may be insulated gate bipolar transistors (IGBTs) or metal-oxide-semiconductor field-effect transistors (MOSFETs).

The output rectifier circuit 22 may include a first diode D1, a second diode D2, a first inductor Lf and a first capacitor Co. The second transformer T2 includes a first secondary side winding NS1 and a second secondary side winding NS2. The heteronymous end of the first secondary side winding NS1 is connected to the homonymous end of the second secondary side winding NS2, the homonymous end of the first secondary side winding NS1 is connected to the positive electrode of the first diode D1, the heteronymous end of the second secondary side winding NS2 is connected to the positive electrode of the second diode D2, the negative electrode of the first diode D1 and the negative electrode of the second diode D2 are respectively connected to the first end of the first inductor Lf, the second end of the first inductor Lf is connected to the first end of the first capacitor Co, and the second end of the first capacitor Co is connected to the homonymous end of the second secondary side winding NS2. Two ends of the first capacitor Co are the output ends of the output rectifier circuit 22, and are respectively connected to the two ends of the braking coil. In this embodiment, the output rectifier circuit 22 adopts a full-wave rectifier circuit, which has fewer rectifier components and lower cost, thereby reducing the cost of the entire elevator contracting brake control circuit 100.

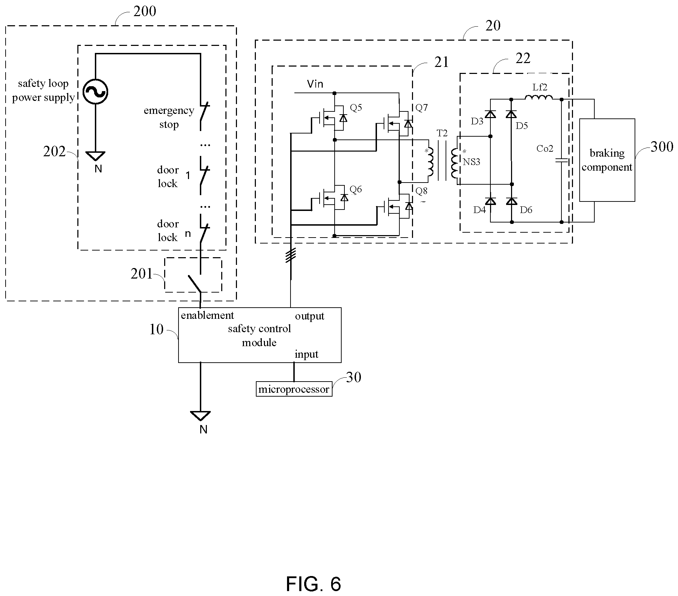

Referring to FIG. 6, in an embodiment, the second transformer T2 includes a third secondary side winding NS3. The output rectifier circuit 22 includes a third diode D3, a fourth diode D4, a fifth diode D5, a sixth diode D6, a second inductor Lf2 and a second capacitor Co2. The homonymous ends of the third secondary side winding NS3 are respectively connected to the positive electrode of the third diode D3 and the negative electrode of the fourth diode D4, the heteronymous ends of the third secondary side winding NS3 are respectively connected to the positive electrode of the fifth diode D5 and the negative electrode of the sixth diode D6, the negative electrode of the third diode D3 and the negative electrode of the fifth diode D5 are respectively connected to the first end of the second inductor Lf2, the second end of the second inductor Lf2 is connected to the first end of the second capacitor Co2, the second end of the second capacitor Co2 is respectively connected to the positive electrode of the fourth diode D4 and the positive electrode of the sixth diode D6. The two ends of the second capacitor Co2 are the output ends of the output rectifier circuit 22 and are respectively connected to the two ends of the braking coil. In this embodiment, the output rectifier circuit 22 adopts a full-bridge rectifier circuit, the transformer utilization rate is higher than that of the full-wave rectifier circuit, and the conversion efficiency is higher.

In summary, based on the above structure, the present application provides an isolated and highly secure brake holding control circuit. Compared with the existing circuit, the holding brake contactor is eliminated, the elevator stop failure caused by the abnormal holding brake contactor is avoided, and the operation noise of the holding brake contactor is avoided, which improves people's experience in the elevator. The switch power supply provides isolation power supply for the braking coil, which improves the safety of the brake control.

The present application also provides an elevator, which includes a elevator safety loop, a braking component and an elevator contracting brake control circuit. The structure of the elevator contracting brake control circuit can refer to the above embodiment, including a safety control module, a power supply switching circuit and a microprocessor. The control end of the safety control module is connected to the elevator safety loop, the input end of the safety control module is connected to the microprocessor, and the output end of the safety control module is connected to the control end of the power supply switching circuit. The microprocessor is configured to output a control signal to the safety control module. The safety control module is configured to turn on or turn off the electrical connection between the microprocessor and the power supply switching circuit according to the output signal of the elevator safety loop. The power supply switching circuit is configured to supply power to the braking component according to the control signal. Since the elevator system of this embodiment adopts the technical solution of the above elevator contracting brake control circuit, the elevator has all the beneficial effects of the above elevator contracting brake control circuit.

The above descriptions are only embodiments of the present application, and are not intended to limit the scope of the present application. Under the inventive concept of the present application, any equivalent structural transformations made by using the contents of the description and drawings of the present application, or direct/indirect applications in other related technical fields are included in the scope of the present application.

## Claims

1. An elevator contracting brake control circuit, **characterized by** comprising:
a safety control module;
a power supply switching circuit; and
a microprocessor, wherein:
a control end of the safety control module is connected to an elevator safety loop, an input end of the safety control module is connected to the microprocessor, and an output end of the safety control module is connected to a control end of the power supply switching circuit;
the microprocessor is configured to output a control signal to the safety control module;
the safety control module is configured to turn on or turn off an electrical connection between the microprocessor and the power supply switching circuit according to an output signal of the elevator safety loop; and
the power supply switching circuit is configured to supply power to a braking component according to the control signal.

2. The elevator contracting brake control circuit according to claim 1, wherein:
the microprocessor is configured to output a pulse width modulation (PWM) control signal to the safety control module; and
the safety control module is configured to generate a safety signal according to an output power supply of the elevator safety loop, and the safety signal is configured to control a transmission channel of the PWM control signal to be turned on or turned off.

3. The elevator contracting brake control circuit according to claim 2, wherein:
the microprocessor is configured to output the PWM control signal to the safety control module;
the safety control module comprises a first transformer and an isolation module; and
the first transformer is configured to generate a safety power supply according to the output power supply of the elevator safety loop, and the safety power supply is configured to control the isolation module to start or stop.

4. The elevator contracting brake control circuit according to claim 3, wherein:
the safety control module further comprises a rectifier filter circuit, and the isolation module comprises a first isolation chip and a second isolation chip;
an input end of the first transformer is connected to the elevator safety loop, an output end of the first transformer is connected to an input end of the rectifier filter circuit, an output end of the rectifier filter circuit is respectively connected to a power supply end of the first isolation chip and a power supply end of the second isolation chip, an input end of the first isolation chip is connected to the microprocessor, an output end of the first isolation chip is connected to an input end of the second isolation chip, and an output end of the second isolation chip is connected to the control end of the power supply switching circuit; and
the rectifier filter circuit is configured to convert the safety power supply into a power source, and the power source is configured to control the first isolation chip and the second isolation chip to start or stop.

5. The elevator contracting brake control circuit according to claim 1, wherein the control end of the safety control module is connected to an end of the elevator safety loop.

6. The elevator contracting brake control circuit according to claim 1, further comprising:
an elevator controller, wherein:
the elevator safety loop comprises a safety circuit and a switch circuit;
a control end of the switch circuit is configured to connect to the elevator controller, an input end of the switch circuit is configured to access the safety circuit, and an output end of the switch circuit is connected to the control end of the safety control module;
the switch circuit is configured to be conductive according to a closing signal issued by the elevator controller, so as to transmit an output signal of the safety circuit to the safety control module; and
the switch circuit is configured to be disconnected according to a shutting off signal issued by the elevator controller, so as to stop transmitting the output signal of the safety circuit.

7. The elevator contracting brake control circuit according to claim 1, further comprising:
an elevator controller, wherein:
an input end of the microprocessor is configured to connect to the elevator controller;
the microprocessor is further configured to output a control signal according to a brake opening signal issued by the elevator controller to control the power supply switching circuit to supply power to the braking component; and
the microprocessor is configured to output a stop signal according to a brake holding signal issued by the elevator controller to control the power supply switching circuit to stop supplying power to the braking component.

8. The elevator contracting brake control circuit according to claim 1, wherein:
the power supply switching circuit comprises a power conversion circuit, a second transformer and an output rectifier circuit;
a control end of the power conversion circuit is a control end of the power supply switching circuit, an output end of the power conversion circuit is connected to a primary side of the second transformer, a secondary side winding of the second transformer is connected to an input end of the output rectifier circuit, and an output end of the output rectifier circuit is an output end of the power supply switching circuit; and
the power conversion circuit is configured to convert an input first DC power supply voltage according to the control signal and transmit the first DC power supply voltage to the secondary side winding of the second transformer through the primary side of the second transformer, so that the first DC power supply voltage is converted into a second DC voltage and is output.

9. The elevator contracting brake control circuit according to claim 8, wherein the power conversion circuit is a full-bridge topology circuit or a half-bridge topology circuit, and the output rectifier circuit is a full-wave rectifier circuit or a full-bridge rectifier circuit.

10. An elevator, **characterized by** comprising:
an elevator safety loop;
a braking component; and
the elevator contracting brake control circuit according to any one of claims 1 to 9, wherein:
the elevator contracting brake control circuit comprises a safety control module, a power supply switching circuit and a microprocessor;
a control end of the safety control module is connected to the elevator safety loop, an input end of the safety control module is connected to the microprocessor, and an output end of the safety control module is connected to a control end of the power supply switching circuit;
the microprocessor is configured to output a control signal to the safety control module;
the safety control module is configured to turn on or turn off an electrical connection between the microprocessor and the power supply switching circuit according to an output signal of the elevator safety loop; and
the power supply switching circuit is configured to supply power to the braking component according to the control signal.
